Europäisches Patentamt

(19) European Patent Office

Office européen des brevets

(11) Publication number: **0 076 153**
**A2**

(12) # EUROPEAN PATENT APPLICATION

(21) Application number: **82305127.1**

(22) Date of filing: **29.09.82**

(51) Int. Cl.³: **H 04 N 5/44**

(30) Priority: **29.09.81 GB 8129435**

(43) Date of publication of application:
**06.04.83 Bulletin 83/14**

(84) Designated Contracting States:
**DE FR IT NL**

(71) Applicant: **ITT INDUSTRIES INC.**
**320 Park Avenue**
**New York, NY 10022(US)**

(84) Designated Contracting States:
**FR IT NL**

(71) Applicant: **Deutsche ITT Industries GmbH**
**Hans-Bunte-Strasse 19 Postfach 840**
**D-7800 Freiburg(DE)**

(84) Designated Contracting States:
**DE**

(72) Inventor: **Vance, Ian Alistair Ward**
**"Larkfield" Debden Road**
**Newport Essex(GB)**

(74) Representative: **Dennis, Mark Charles et al,**
**ITT-UK Patent Department Maidstone Road**
**Foots Cray Sidcup DA14 5HT(GB)**

(54) TV receiver.

(57) A monolithic circuit for a television receiver including an amplifier 1 receiving the r.f. input which passes via filter 2 and mixer 3 also receiving the output from local oscillator 4. The i.f. therefrom passes via filter 5 and i.f. amplifier 6 to the synchronous demodulator formed by filter 9 and mixer 8 whereby the demodulated video information is available for further use. A frequency discriminator formed by mixer 10 and delay 11, tracks any frequency variations to provide feedback control to oscillator 4 to compensate for temperature fluctuation. The elements 5, 9, 11 are fabricated using SAW techniques. The elements 1,3,4,6,8,10 are standard semiconductor configurations.

Additional filtering after mixer 3 can be employed to separate the sound channel from the composite video and a further SAW delay line employed to produce the sound channel discriminator.

./...

CHIP BOUNDARY

R.F. INPUT

DIVIDED OSC. O/P

OSC TUNE I/P

VIDEO O/P

AFC O/P

AGC 7

÷ Q 12

I.A.W.Vance - 14

T.V. RECEIVER

The invention relates to a television receiver and more especially but not solely to a single conversion super-heterodyne type.

An object of the invention is to provide a circuit for the radio frequency portions of a television receiver, (that is those portions between the antenna and the demodulator output) which can be formed in a monolithic form.

According to the invention we provide a monolithic circuit for a television receiver characterized in that it includes a plurality of surface acoustic wave (SAW) devices fabricated with semiconductor elements on a single chip and in that feedback means are connected between said devices to compensate for temperature variations.

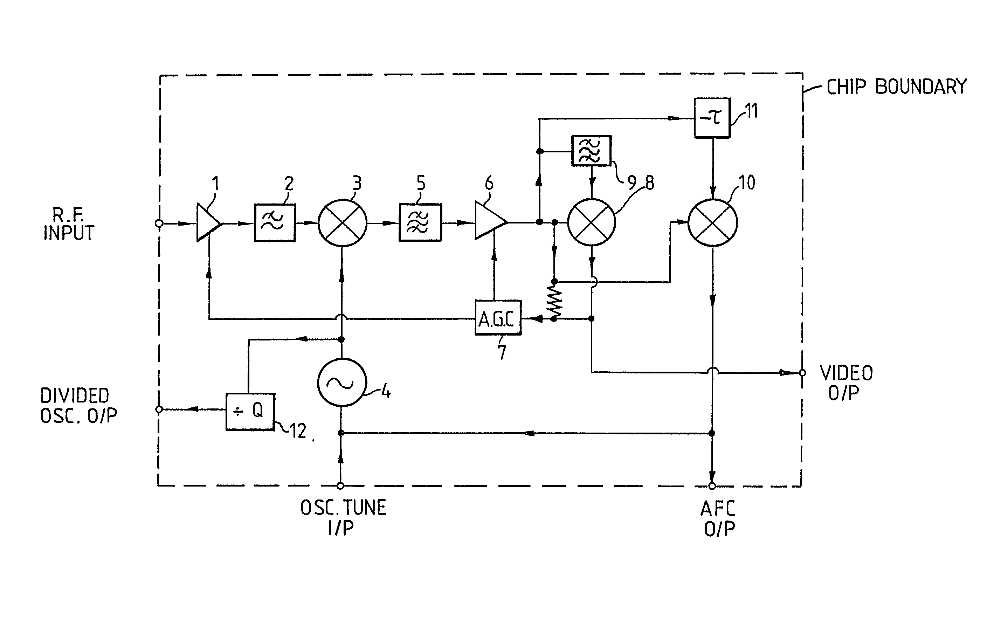

An embodiment of the invention will now be described by way of example with reference to the accompanying drawing which shows a block-circuit diagram of the radio frequency portion of the television receiver (VHF or UHF).

An r.f. signal amplifier 1 is connected at its output to an image noise rejecting low pass filter 2 which in turn is connected to one input of a mixer 3. The other input of the mixer receives the output of local oscillator 4. The output from the mixer 3 passes to a main intermediate frequency (i.f.) amplifier 6 via a channel filter 5. A mixer 8 forming a synchronous demodulator has a first input connected to receive the output of amplifier 6 and a second input to receive the filtered output of the amplifier via a video carrier selecting filter 9 to provide the demodulated video at the mixer output. A further mixer 10 together with a delay circuit 11 forms a frequency discriminator designed to operate at the video carrier frequency by making use of the i.f. amplifier output and a delayed version thereof to provide automatic frequency control (AFC) from the mixer output dependent on any difference therebetween. A detector 7 provides automatic gain control (AGC) to the main amplifier 6 and optionally as shown to the r.f. input amplifer 1. Alternatively the AGC may be provided by reference to the video output in which case the detector 7 is replaced by a low pass filter. The output of oscillator 4 may conveniently be provided to an optional divider 12 to provide a reduced frequency source for use in channel selection.

The receiver disclosed operates as a single conversion superheterodyne type having an intermediate frequency of about 340 MHz. Using such a high i.f. enables the image frequency rejection to be simply obtained. The channel filter 5 is also at this frequency and is realised in surface acoustic wave technology monolithically integrated with the semiconductor chip. Although shown as a single unit, the filter block 5 may be split into two or more sections with isolating buffer amplifiers between them. The synchronous video demodulator 8 is also realised using a surface acoustic wave (SAW) device to extract the carrier component in the correct phase. Furthermore, a third SAW device is used as the delay element 11. The three SAW devices 5, 9 and 11 may all be constructed on the same substrate and because of this will track their centre frequencies with

- 3 -                    0076153

temperature or other environmental variations.

The AFC output from the mixer 10 is shown connected to oscillator 4 to provide automatic fine tuning (AFT) thereof. Thus the AFT signal applied to the local oscillator maintains the intermediate frequency signal correctly placed in the channel filter. This feedback (typically connected on the chip itself as shown) is especially important in the monolithic realisation as the temperature coefficient of the SAW devices when realised in the compatible monolithic form (e.g. with a zinc oxide layer overlaid on the semiconductor substrate) would otherwise be such as to give an unacceptable drift.

The divider 12 may be a dual-modulus divider (e.g. P,P + 1). In the case that the divider forms part of a synthesiser the AFT signal may be applied to the synthesiser's control system. As an alternative to the divider 12 there may be provided some other form of processed oscillator output, e.g. via a further SAW comb line to facilitate channel selection. The filter 2, if used, may be switched to allow coverage of the VHF and UHF bands.

In the receiver described the sound channel is recovered from the composite video output. However, in an alternative implementation (not shown) the sound channel may be split off after the mixer 3 via a separate filter and processed independently. In such an arrangement a further SAW delay line is needed to produce the sound channel discriminator. The elements 1, 3, 4, 6, 8, 10 are standard semiconductor configurations.

The technology for monolithically integrating electronic on-chip functions and SAW devices is previously known as is the high first i.f. superhet receiver. A circuit as above described enables a T.V. receiver to be produced on a single chip.

- 4 -

0076153

CLAIMS:

1.  A monolithic circuit for a television receiver characterized in that it includes a plurality of surface acoustic wave (SAW) devices fabricated with semiconductor elements on a single chip and in that feedback means are connected between said devices to compensate for temperature variations.

2. A circuit as claimed in claim 1, characterized in that the feedback means are integrally formed in the chip structure.

3. A circuit as claimed in claim 2, characterized in that the SAW devices include a delay circuit forming part of the feedback means.

4. A circuit as claimed in claim 1, 2 or 3, characterized in that the SAW devices include at least one filter and mixer.

5. A T.V. receiver characterized in that it has a circuit as claimed in any preceding claim.